Europäisches Patentamt

European Patent Office

Office européen des brevets

(19)

(11) Veröffentlichungsnummer : **0 210 553**
**B1**

(12) **EUROPÄISCHE PATENTSCHRIFT**

(45) Veröffentlichungstag der Patentschrift :
30.08.89

(51) Int. Cl.⁴ : **B 60 G 15/12, F 16 F 9/54**

(21) Anmeldenummer : **86109872.1**

(22) Anmeldetag : **18.07.86**

(54) **Vorrichtung zum Ausgleich der Radaufstands-Querkräfte an einem Federbein.**

(30) Priorität : 26.07.85 DE 3526815

(43) Veröffentlichungstag der Anmeldung :
04.02.87 Patentblatt 87/06

(45) Bekanntmachung des Hinweises auf die Patenter-
teilung : 30.08.89 Patentblatt 89/35

(84) Benannte Vertragsstaaten :
DE FR GB IT SE

(56) Entgegenhaltungen :
US–A– 4 332 397
PATENT ABSTRACTS OF JAPAN, Band 6, Nr. 204 (M-
164)[1082], 15. Oktober 1982

(73) Patentinhaber : AUDI AG
Auto-Union-Strasse 1 Postfach 220
D-8070 Ingolstadt (DE)

Gold, Henning, Prof. Dr.-Ing.
Im Rheinblick 24
D-6530 Bingen 1 (DE)

(72) Erfinder : Gold, Henning, Prof. Dr.-Ing.
Im Rheinblick 29
D-6530 Bingen 1 (DE)

(74) Vertreter : Le Vrang, Klaus
AUDI AG Postfach 220 Patentabteilung I/EQP
D-8070 Ingolstadt (DE)

Beschreibung

Die Erfindung betrifft eine Vorrichtung zum Ausgleich der Radaufstands-Querkräfte an einem Federbein einer Radaufhängung für Kraftfahrzeuge mit Luftfederung.

Eine gattungsgemäße Vorrichtung ist der DE-A- 20 63 448 entnehmbar. Dabei wird die die Querkräfte kompensierende Federkraft durch Schrägstellung des im wesentlichen zylindrischen Rollbalges gegenüber der Dämpferbein-Mittelachse erzielt, und zwar durch eine entsprechende Neigung des oberen, das Federelement abschließenden Federtellers. Der Federteller wiederum ist über ein gemeinsames Drehlager mit der Kolbenstange des Stoßdämpfers am Aufbau des Kraftfahrzeuges abgestütz. Um Fahrwerksgeräusche von dem Aufbau fernzuhalten, ist zwischen diesem Drehlager und dem Aufbau ein elastisches Gummilager vorgesehen.

Mit einer derartigen Konstruktion sind jedoch die durch die einseitig angreifenden Radaufstandskräfte entstehenden Querkräfte am Stoßdämpferlager und am Kolben des Stoßdämpfers nur teilweise ausgleichbar. Ferner ergeben sich durch die relativ starke Schrägstellung des Federelementes bzw. Rollbalges bauliche, räumliche und funktionelle Nachteile.

Aufgabe der Erfindung ist es, die gattungsgemäße Vorrichtung derart weiterzubilden, daß die am Dämpferbein auftretenden Querkräfte bei geringem Mehraufwand ohne bauliche, räumliche oder funktionelle Nachteile weitgehendst eliminiert sind.

Diese Aufgabe wird mit den kennzeichnenden Merkmalen des Patentanspruches 1 gelöst. Erfindungsgemäß wird die an der aufbauseitigen Aufnahme des Rollbalges wirkende Resultierende unmittelbar oder bei lenkbaren Rädern mittelbar über ein Drehlager am Aufbau abgestützt, und zwar funktionell getrennt von der Anlenkstelle des Stoßdämpfers. Dies hat den gravierenden Vorteil, daß nunmehr die von dem Rollbalg erzeugte Kompensationskraft als innere Kraft am Aufbau, und nicht wie bisher üblich, an der Kolbenstange abgestützt wird. Erst durch diese Maßnahme ist es möglich, die an der Kolbenstange wirkenden Reibungskräfte nahezu gegen Null abzubauen.

In baulich besonders günstiger Weise kann dabei gemäß Anspruch 2 der Rollbalg bzw. dessen Aufnahmekonsole unelastisch, d. h. starr oder bei gelenkten Rädern nur verdrehbar, am Aufbau abgestützt sein, während der Stoßdämpfer elastisch mit der Aufnahmekonsole verbunden ist. Die von dem Federelement ausgehenden Kompensationskräfte werden somit unmittelbar in den Aufbau eingeleitet. Die Geräuschisolierung zwischen dem Fahrwerk und dem Aufbau wird allein durch die elastische Rollmembrane hergestellet.

Besonders vorteilhaft kann entsprechend den Merkmalen des Anspruches 3 ein Schild vorgesehen sein, welches den Rollbalg an seinem Außenumfang entgegen den auftretenden Querkräften seitlich abstütz, so daß dieser eine entgegengerichtete Querkraft aufbauen kann. Das Schild kann entweder einstückig mit der Aufnahmekonsole ausgebildet, an dieser befestigt oder ein unmittelbares Bauteil des Aufbaues sein, beispielsweise eine entsprechend geformte Wand eines Radhauses. Durch das Schild kann die Querkraftkompensation ohne eine baulich nachteilige, starke Schrägstellung oder Desachsierung des Rollbalges hergestellt werden.

Vorteilhafte und zweckmäßige Weiterbildungen der Erfindung sind ferner den Patentansprüchen 4 bis 15 entnehmbar. Nähere Details dazu sind in der folgenden Figurenbeschreibung aufgeführt.

Vorzugsweise sollte das Schild den Außenumfang des Rollbalges um ca. 90° umfassen, um die Abstützkräfte flächenspezifisch niedrig zu halten und um ein faltenfreies, verschleißarmes Abrollen des Rollbalges auf dem Behälterrohr des Dämpferbeines sicherzustellen.

Durch die Kombination des Schildes mit einem Rohrabschnitt ergibt sich ein verformungssteifes Bauteil, welches günstig an die aufbauseitige Lagerung des Dämpferbeines anbindbar ist. Zusätzlich zur Kompensation der Querkräfte durch das Schild wird eine obere und untere Desachsierung der Aufnahme des Rollbalges an der Aufnahmekonsole bzw. am Stoßdämpfer gemäß den Merkmalen der Patentansprüche 6 und 7 vorgeschlagen.

Durch die Merkmale des Patentanspruches 8 wird ferner der sich ändernden statischen und/ oder dynamischen Radlast durch das Ein- und Ausfedern des Rades Rechnung getragen, indem auch die seitliche Abstützung des Rollbalges über den Federweg veränderlich ausgebildet ist. Dies ergibt insbesondere beim Einfedern eine stärkere Einwölbung des Rollbalges im Bereich des Schildes, woraus eine höhere, den Querkräften entgegenwirkende Querkraft resultiert.

Alternativ dazu kann jedoch auch die Abrollhülse für den Rollbalg am Stoßdämpfer kegelförmig ausgebildet sein, um ebenfalls die den Querkräften entgegenwirkenden Kompensationskräfte über den Federweg veränderlich zu gestalten und um gegebenenfalls eine progressive Federrate zu schaffen.

Gemäß den Ansprüchen 12 bis 15 kann die aufbauseitige Rollbalgaufnahme auch wie bekannt mit der Kolbenstage verbunden sein, wenn zusätzlich eine Abstützung der Rollbalgaufnahme geschaffen ist. Die Rollbalgaufnahme kann dadurch ebenfalls keine störenden Querkräfte auf die Kolbenstange übertragen, sondern stützt diese unmittelbar am Aufbau ab. Der elastische Puffer läßt dabei geringfügige Verlagerungen zu, die beim Ein- und Ausfedern des Rades aufgrund der Kinematik der Radaufhängung auftreten können. Bei einem gelenkten Rad kann zwischen der Kolbenstange und deren aufbauseitigem Gummilager sowie zwischen der Rollbalgaufnahme und dem Aufbau je ein Verdrehlager vorgesehen sein, um beim Verschwenken des Rades eine Relativverdrehung der gesamten Baueinheit gegenüber dem Aufbau zuzulassen.

Drei Ausführungsbeispiele der Erfindung sind im folgenden mit weiteren Einzelheiten näher erläutert. Die schematische Zeichnung zeigt in

Fig. 1 eine Radaufhängung für ungelenkte Räder eines Kraftfahrzeuges mit einem Federbein und einer Vorrichtung zur Kompensation der Querkräfte,

Fig. 2 einen Schnitt gemäß Linie II-II der Fig. 1,

Fig. 3 eine weitere Radaufhängung für gelenkte Räder eines Kraftfahrzeuges und ebenfalls einer Vorrichtung zur Kompensation der Querkräfte, jedoch ohne Fahrzeugrad und unteren Querlenker;

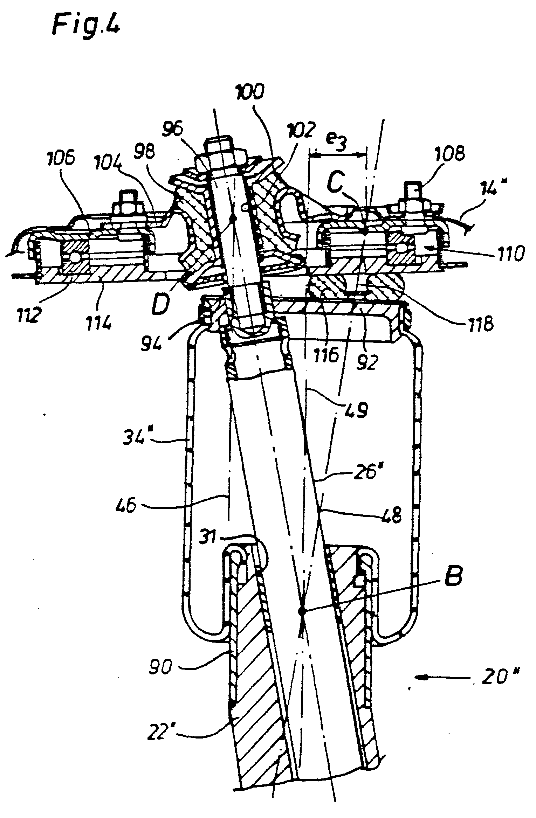

Fig. 4 eine dritte Version einer Radaufhängung für gelenkte Räder eines Kraftfahrzeuges mit einem schräg gestellten Rollbalg, der zusätzlich am Aufbau exzentrisch abgestützt ist.

Fig. 5 ein Meßdiagramm der an der Radaufhängung nach Fig. 4 auftretenden Reibungskräfte.

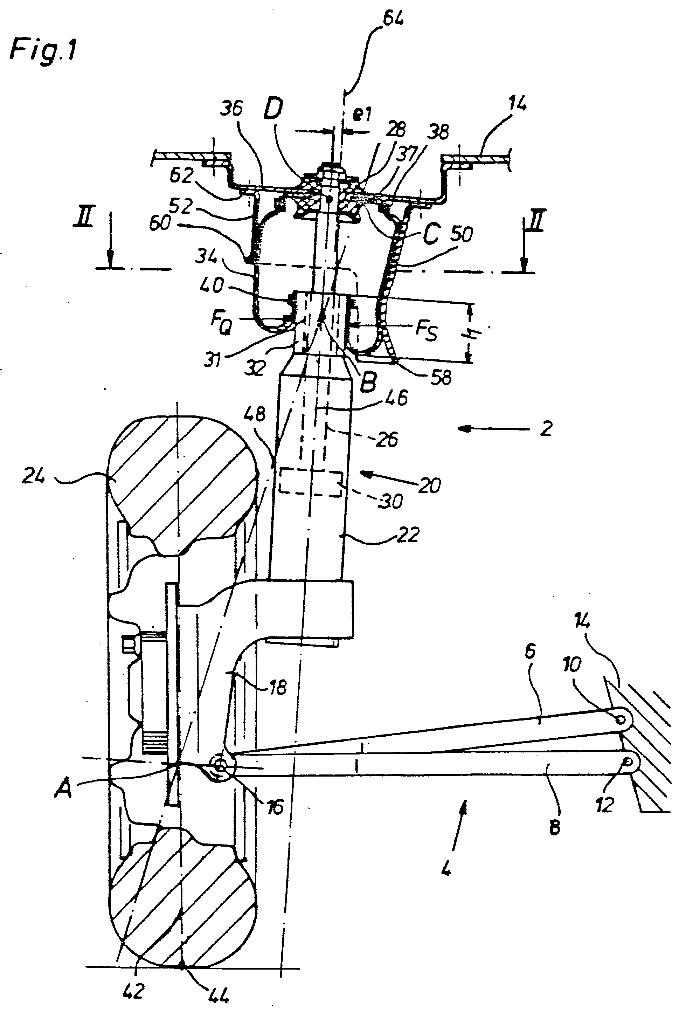

Die Fig. 1 zeigt eine Radaufhängung für die ungelenkten Räder eines Kraftfahrzeuges mit einem Federbein 2 und einem unteren Querlenker 4.

Die beiden Streben 6, 8 des unteren Querlenkers 4 sind über Schwenklager 10, 12 am Aufbau 14 des Kraftfahrzeuges angelenkt. Das frei Ende des Querlenkers 4 ist über ein Lager 16 mit einem Radträger 18 gelenkig verbunden. Der Radträger 18 bildet mit dem teleskopischen Stoßdämpfer 20 eine feste Baueinheit, wobei das Behälterrohr 22 mit dem Radträger 18 entsprechend verbunden ist. An dem Radträger 18 ist in nicht näher dargestellter Weise das Rad 24 des Kraftfahrzeuges drehbar gelagert.

Die Kolbenstange 26 des Stoßdämpfers 20 ist an einer. oberhalb des Rades 24 befindlichen Stelle des Aufbauers 14 unter Zwischenschaltung eines elastischen Gummielementes 28 angelenkt. Die Kolbenstange 26 ist in dem Behälterrohr 22 einmal über den Kolben 30 und zum anderen in der büchsenförmigen Kolbenstangenführung 31 verschiebbar gelagert. Die Kolbenstangenführung befindet sich innerhalb des im Durchmesser verkleinerten Rohrabschnittes 32 des Behälterrohres 22.

Zentrisch um die Kolbenstange 26 herum ist als tragendes Federelement ein elastischer, im wesentlichen zylindrischer Rollbalg 34 angeordnet. Dieser ist an einer am Aufbau 14 befestigten Aufnahmekonsole 36 bzw. einen daran ausgebildeten Ringflansch 37 mittels eines Spannringes 38 unmittelbar befestigt. Am entgegengesetzten Ende ist der Rollbalg 34 nach innen umgestülpt und mittels eines Spannringes 40 an dem durchmesserkleinen Rohrabschnitt 32 des Behälterrohres 22 befestigt. Beim Ein- und Ausfedern kann sich dabei der Rollbalg 34 an dem Rohrabschnitt 32 entsprechend abrollen. Es versteht sich, daß der Rollbalg 34 in nicht dargestellter Weise mit einer Luftdruckquelle und einem Steuerventil zur Steuerung des Überdruckes im Rollbalg 34 verbunden ist.

Nachdem die Radmittenebene 42 bzw. der Radaufstandspunkt 44 außerhalb der Stoßdämpfer-Mittelachse 46 liegen, ergibt sich aufgrund der Radlast eine Kraftwirkungslinie bzw. Resultierende 48, die die Punkte A, B und C schneidet. Der Punkt A ist dabei durch die Radmittenebene 42 und eine gedachte Verlängerung des Querlenkers 4 definiert. Im Punkt B greift die durch den Rollbalg 34 auf das Federbein 2 ausgeübte, der Radlast entgegenwirkende Federkraft an. Auf der Wirkungslinie durch diese beiden Punkte A und B muß dann auch der Punkt C liegen, in dem die Kraft vom Rollbalg 34 auf den Aufbau 14 übertragen wird. Dieser Punkt C ist nicht identisch mit dem Punkt D, welcher für die Achsgeometrie der Radaufhängung bestimmend ist.

Durch die asymmetrisch wirkende Radlast entsteht im Bereich der Kolbenstangenführung (bei 32) eine Querkraft $F_Q$, die einen erhöhten Verschleiß und Verklemmungen am Stoßdämpfer 20 bewirken würde. Da die Radlast sich abhängig von dynamischen Zuständen und von der Beladung des Kraftfahrzeuges ändert, ist auch die Querkraft $F_Q$ unterschiedlich.

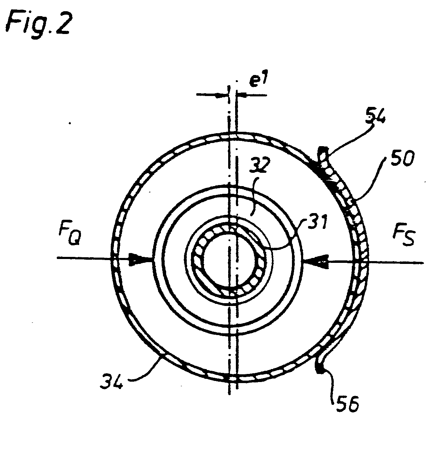

Zur Kompensierung dieser Querkräfte ist im Bereich der oberen Federbeinlagerung 28 am Aufbau 14 an der Aufnahmekonsole 36 ein Schild 50 mit einem Rohrabschnitt 52 befestigt. Das Schild 50 ist dabei so angeordnet, daß es am Außenumfang des Rollbalges 34 anliegend dessen radiale Ausdehnung behindert. Das Schild liegt dabei (vgl. Fig. 2) den auf die Kolbenführung wirkenden Querkräften $F_Q$ diametral gegenüber und erzeugt eine entgegengerichtete Querkraft $F_S$, so daß die Kolbenstangenführung bzw. der Stoßdämpfer 20 von Querkräften entlastet sind.

Wie aus der Zeichnung, Fig. 1, ersichtlich ist, bewirkt das den Rollbalg 34 seitlich eindrückende Schild 50 auf dem Rohrabschnitt 32 eine größere Abstützbasis $1_1$ als auf der Seite der auftreffenden Querkräfte $F_Q$, so daß die innerhalb des Rollbalges 34 wirkenden Luftdruckkräfte, abgestützt am Schild 50, unmittelbar die Querkraft $F_S$ an der Kolbenstangenführung erzeugen. Das Schild 50 ist dabei so lange ausgeführt, daß es vom Aufbau 14 aus nach unten ragend den Rohrabschnitt 32 auch bei ausgefedertem Rad 24 überdeckt.

Ferner ist das Schild 50 (vgl. Fig. 2) so ausgeführt, daß es den Rollbalg 34 auf einen Umfangsabschnitt von ca. 90° umfaßt. Die Randbereiche 54, 56, 58 des Schildes 50 bzw. der Randbereich 60 des Rohrabschnittes 52 sind jeweils vom Rollbalg 34 weg abgebogen, um eine Beschädigung während dessen Verformung beim Durchfedern des Rades auszuschließen. Der Radius der Schildkrümmung kann auch insgesamt so groß gewählt werden, daß die Andrückung in Schildmitte am größten ist und zu den Rändern 54, 56 hin auf Null abnimmt.

Der Rohrabschnitt 52 ist über einen angeformten Ringflansch 62 mit der Aufnahmekonsole 36 bzw. mit dem Aufbau 14 um das Federbeinlager 28 herum starr verbunden bzw. verschraubt. Die aufbauseitige Aufnahme 37 des Rollbalges 34 ist um einen Mittenversatz $e_1$ exzentrisch zur aufbau-

seitigen Stoßdämpferlagerung (Punkt D) angeordnet, wobei die Mittelachse 64 der Rollbalgaufnahme 37 in Richtung der auftretenden Querkräfte $F_Q$ zum Schild 50 hin verschoben ist. Dieser Versatz verstärkt den durch das Schild 50 hervorgerufenen Querkrafteffekt.

Das Schild 50 ist nicht in geradliniger Verlängerung des Rohrabschnittes 52 symmetrisch, sondern derart profiliert ausgeführt, daß sich dessen abstützende Umfangswand in Abhängigkeit von der Einfederung verschieden stark an die Mittelachse 46 des Stoßdämpfers 20 annähert. Dies bewirkt, daß mit zunehmendem Einfedern des Rades und mit damit zunehmender Querkraft $F_Q$ aufgrund der stärkeren Einwölbung des Rollbalges 34 die Abstützbasis $l_1$ auf dem Rohrabschnitt 32 überproportional zur gegenüberliegenden Abstützbasis vergrößert, woraus eine Zunahme der kompensierenden Querkraft $F_S$ resultiert. Die Profilierung des Schildes 50 kann entsprechend den geometrischen Verhältnissen an der Radaufhängung und den auftretenden Radlasten ausgeführt sein und soll jedenfalls eine über den Federweg weitgehend querkraftfreie Stoßdämpferführung sicherstellen.

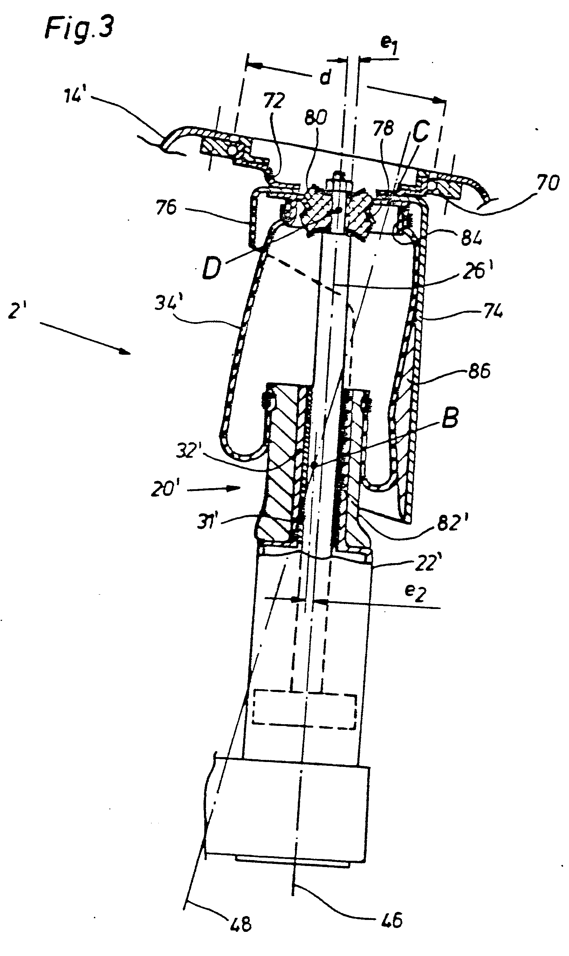

Die Fig. 3 zeigt eine Radaufhängung für gelenkte Räder, welche im wesentlichen gleich der in Fig. 1 dargestellten ausgebildet ist. Gleiche Teile sind mit gleichen Bezugszeichen versehen.

Um die Lenkbarkeit des Rades zu ermöglichen, ist das Federbein 2' über ein Wälzlager 70 drehbar gegenüber dem Aufbau 14' angeordnet. Das Wälzlager 70 ist an einer asymmetrisch ausgebildeten Aufnahmekonsole 72 befestigt, an der ein Schild 74 mit einem Rohrabschnitt 76 und ein Ringflansch 78 festgelegt sind. Der Ringflansch 78 trägt ein Gummilager 80, in dem die Kolbenstange 26' des Stoßdämpfers 20' elastisch aufgenommen ist. Das Gummilager 80 kann mit dem Ringflansch 78 durch Vulkanisation verbunden sein. Der Außenring des Wälzlagers 70 ist mit dem Aufbau 14' verschraubt.

. An dem Ringflansch 78 als unmittelbare Aufnahme des Federelementes ist ferner der Rollbalg 34' angeschlossen, so daß der Rollbalg 34' über den Ringflansch 78, den mit einem Umfangsbund dazwischen liegenden Rohrabschnitt 76 und die Aufnahmekonsole 72 unelastisch, jedoch verdrehbar, mit dem Aufbau 14' verbunden ist.

Als untere Aufnahme des Rollbalges 34' dient eine Abrollhülse 82, die auf den Rohrabschnitt 32' des Behälterrohres 22' festgelegt ist. Der Rollbalg 34' ist wiederum mit entsprechenden Spannbändern mit den beschriebenen Aufnahmen verbunden.

Der Ringflansch 78 ist asymmetrisch gestaltet, wobei dessen äußerer Ringkragen 84 um ein Maß $e_1$ exzentrisch zur Mittelachse der Aufnahme für die Kolbenstange 26' ausgebildet ist. Desgleichen weist die Abrollhülse 82 bzw. deren Außenumfang einen exzentrischen Versatz $e_2$ gegenüber ihrer zentrischen Bohrung auf. Durch die Exzentrizität $e_1$ und $e_2$ ergibt sich eine Verstärkung der durch das Schild 74 erzeugten Gegen-Querkraft.

Das Maß der Exzentrizität $e_1$ und $e_2$ sowie die Vorspannung und Konfiguration des Schildes 74 können empirisch ermittelt werden. Dazu können in einem Versuchsaufbau bei entfernter Kolbenstange 26 und simulierter Radlast die Querkräfte im Punkt B gemessen und der Reibungsanteil der Kolbenstangenführung 31 und des Kolbens 30 des Stoßdämpfers rechnerisch ermittelt werden. Durch entsprechendes Verstellen der Exzentrizität $e_1$ und $e_2$ sowie durch radiales Verschieben des Schildes 34 können dann Werte eingestellt werden, die geringstmögliche Reibungskräfte erwarten lassen.

An dem Schild 74 ist ein Polster 86 aus Kunststoff vorgesehen, welches eine definierte Einwölbung des Rollbalges 34' beim Einfedern des Rades und damit eine definierte Veränderung der Kompensationskraft $F_S$ sicherstellt. Ferner ist die Abrollhülse 82 kegelig gestaltet, um zusammen mit dem Polster 86 die zur Erzeugung der Kompensationskraft $F_S$ erforderliche Einwölbung des Rollbalges 34' zu erzielen und um durch Veränderung des wirksamen Abrolldurchmessers des Rollbalges 34' eine progressive Federrate insbesondere beim sehr starken Einfedern des Rades sicherzustellen. Der wirksame Durchmesser d des Wälzlagers 70 ist so groß ausgelegt, daß der Punkt C innerhalb des Wälzkreises des Wälzlagers 70 liegt. Dadurch werden Kippmonente am Wälzlager 70 vermieden und die von dem Rollbalg 34' ausgehenden Querkräfte $F_S$ sicher und speilfrei in den Aufbau 14' eingeleitet.

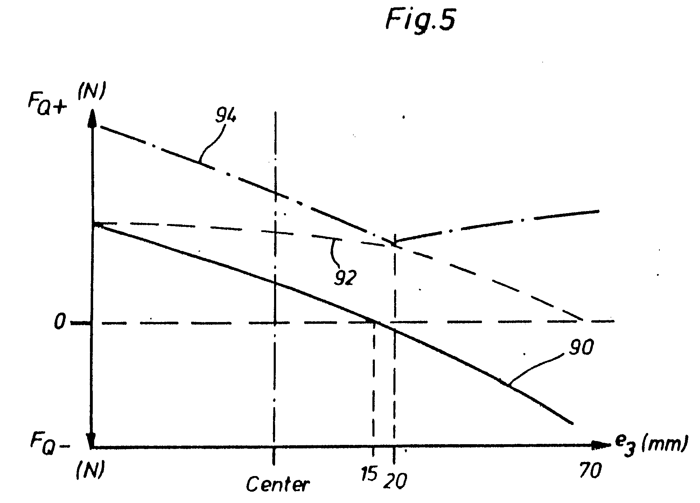

Die Fig. 5 zeigt ebenfalls eine Radaufhängung für gelenkte Räder eines Kraftfahrzeuges. Gleiche Teile sind wiederum mit gleichen Bezugszeichen versehen. Die nicht dargestellten Elemente der Radaufhängung sind im wesentlichen gleich denen der Fig. 1.

Das Behälterrohr 22″ des Stoßdämpfers 20″ ist im Bereich der unteren Rollbalgaufnahme in Richtung der Resultierenden 48 abgebogen. Auf dem Behälterrohr 22″ ist eine kreissymmetrische Abrollhülse 90 befestigt, wobei die Abrollhülse 90 zugleich den Rollbalg 34″ am Behälterrohr 22″ festlegt.

Die obere Aufnahme des Rollbalges 34″ erfolgt über einen Ringteller 92, der auf einem im Durchmesser verringerten Absatz 94 der Kolbenstange 26″ gasdicht befestigt (z. B. verschweißt) ist. Der Ringteller 92 ist gegenüber der Kolbenstange 26″ derart asymmetrisch bzw. exzentrisch angeordnet und geneigt, daß die Mittelachse 49 des Rollbalges 34″ der Resultierenden 48 soweit möglich angenähert ist.

Ein in den Absatz 94 der Kolbenstange 26″ eingeschraubter Schraubbolzen 96 ist in einem Gummilager 98 verdrehbar gelagert, wobei zwischen einer Innenhülse 100 des Gummilagers 98 und dem Schraubbolzen 96 eine Gleitbüchse 102 aus Kunststoff derart eingesetzt ist, so daß nur Querkräfte, aber keine Axialkräfte, übertragen werden.

Das Gummilager 98 sitzt fest in einem Ringflansch 104, der mit der oberen Aufnahmekonsole 106 verschraubt ist. Die Aufnahmekonsole 106 wiederum ist über Schrauben 108 am Aufbau 14″

des Kraftfahrzeuges befestigt. An der Aufnahmekonsole 106 ist ein Wälzlager 110 abgestützt, dessen einer Lagerring 112 fest mit einem Drehkranz verbunden ist.

Zwischen dem Drehkranz 114 und dem Ringteller 92 ist zur Abstützung der axialen Federkräfte ein elastischer Puffer 116 angeordnet, wobei der Puffer 116 um das Maß $e_3$ exzentrisch zur Mittelachse 49 des Rollbalges 34″ versetzt ist. Ferner ist der Puffer 116 ringförmig gestaltet und auf einen am Drehkranz 114 ausgebildeten Stift 118 aufgeclipst. Der Puffer 116 liegt im wesentlichen innerhalb des Wälzkreises des Wälzlagers 110.

Beim Lenken des Rades werden die Kolbenstange 26″ und der Rollbalg 34″ mit dem Puffer 116 und dem Drehkranz 114 mit verdreht. Die auf den Ringteller wirkenden Federkräfte werden ausschließlich über den Puffer 116 auf den Aufbau 14″ übertragen, während die Dämpferkräfte und die Radführungskräfte von dem Gummilager 98 aufgenommen werden.

Aus baulichen Gründen ist es in der Regel nicht möglich, daß die Wirkungslinie 49 des Rollbalges 34″ mit der Resultierenden 48 zusammenfällt. Wenn beide Linien (48, 49) nicht zusammenfallen, ist es erforderlich, die Federkraft über einen Versatz $e_3$ des Puffers 116 in den Aufbau einzuleiten. Durch diese Exzentrizität $e_3$ wird ein Moment in den Ringteller 92 und damit in die Kolbenstange 26″ eingeleitet, das Einfluß auf die Reibungskräfte an der Kolbenstangenführung 31 und am Stoßdämpferkolben 30 nimmt und zu einer Minimierung dieser Kräfte beiträgt.

Zur Veranschaulichung zeigt dann die Fig. 5 ein Meßdiagramm, bei dem in der Abszisse die Querkräfte $F_Q$ in Newton und in der Ordinate die Exzentrizität $e_3$ in Millimeter aufgetragen ist. Die Kurve 90 bezeichnet die Querkraft am Kolben 30 des Stoßdämpfers und zeigt, daß diese bei einem Versatz $e_3$ von ca. 15 mm gegen Null geht und dann bei einem weiteren Versatz negative Werte annimmt, d. h. daß die Kompensationskraft $F_S$ bereits die auftretende Querkraft $F_Q$ übersteigen würde. Demgegenüber zeigt die gestrichelte Kurve 92 die entsprechende Querkraft $F_Q$ an der Kolbenstangenführung 31 des Stoßdämpfers, wobei diese erst bei einem Versatz von ca. 70 mm gegen Null gehen würde. Vorteilhaft ist dementsprechend eine Exzentrizität $e_3$ von ca. 20 mm, bei der die Summe der Absolutwerte der Querkräfte $F_Q$ von kolben 30 und Kolbenstangenführung 31 am niedrigsten ist. Es versteht sich jedoch, daß die angegebenen Zahlen und Werte nur beispielsweise sind und von der jeweiligen Konstruktion bzw. davon abhängen, wie weit die Mittelachse 49 des Rollbalges 34″ bis zur Resultierenden 48 geneigt werden kann.

## Patentansprüche

1. Vorrichtung zum Ausgleich der Radaufstands-Querkräfte an einem Federbein einer Radaufhängung für Kraftfahrzeuge, mit einer an zumindest einem unteren Radführungsglied angelenkten Baueinheit mit einem teleskopischen Stoßdämpfer und einem Radträger, welche Baueinheit am oberen Ende am Aufbau des Kraftfahrzeuges abgestützt ist, wobei um den Stoßdämpfer ein Rollbalg als tragendes Federelement derart angeordnet ist, daß die Federkraft in einer den Querkräften entgegenwirkenden Resultierenden Verläuft, dadurch gekennzeichnet, daß diese Resultierende (48) unmittelbar am Aufbau (14) abgestützt ist und die Dämpferlagerung (28 ; 80) unabhängig von dieser Abstützung ist.

2. Vorrichtung nach Anspruch 1, dadurch gekennzeichnet, daß der Rollbalg (34) über eine unelastisch mit dem Aufbau (14) verbundene Aufnahmekonsole (36 ; 72) abgestützt ist und daß der Stoßdämpfer elastisch mittel- oder unmittelbar mit der Aufnahmekonsole verbunden ist.

3. Vorrichtung nach den Ansprüchen 1 und 2, dadruch gekennzeichnet, daß an der Aufnahmekonsole (36, 72) ein Schild (50, 74) angeordnet ist, welches am Außenumfang des Rollbalges (34) angreifend dessen Ausdehnung in Richtung der Querkräfte $F_Q$ behindert.

4. Vorrichtung nach den Ansprüchen 1 bis 3, dadurch gekennzeichnet, daß das Schild (50) den Rollbalg (34) im Bereich der Kolbenstangenführung des Stoßdämpfers (20) um einen Umfangsbereich von bis zu 180°, vorzugsweise um 90° umfaßt.

5. Vorrichtung nach den Ansprüchen 1 bis 4, dadurch gekennzeichnet, daß das Schild (50 ; 74) mit einem Rohrabschnitt (52 ; 76) versehen ist, welcher den Rollbalg (34) im Bereich außerhalb der Kolbenstangenführung vollständig umschließt bzw. stützt.

6. Vorrichtung nach einem oder mehreren der vorhergehenden Ansprüche, wobei die Mittelachse des Rollbalges im wesentlichen gleich oder parallel zur Resultierenden (48) verläuft, dadurch gekennzeichnet, daß die Rollbalgaufnahme an der Aufnahmekonsole (72) am Aufbau (14′) und an der Abrollhülse (82) des Stoßdämpfers (22′) exzentrisch ausgebildet ist.

7. Vorrichtung nach einem oder mehreren der Ansprüche 1 bis 6, dadurch gekennzeichnet, daß die durch das Schild (50, 74) bewirkte Kompensationskraft durch ein Verschieben der Rollbalgaufnahme an der Aufnahmekonsole (72) zum Schild hin ($e_1$) und ein Verschieben der Abrollhülse (82) vom Schild weg ($e_2$) verstärkt wird.

8. Vorrichtung nach einem oder mehreren der vorhergehenden Ansprüche, dadurch gekennzeichnet, daß das Schild (50 ; 74) in Abhängigkeit von der Einfederung des Stoßdämpfers (20) die Ausdehnung des Rollbalges (34) verschieden stark behindert.

9. Vorrichtung nach einem oder mehreren der vorhergehenden Ansprüche, dadurch gekennzeichnet, daß die Abrollhüllse (82) für den Rollbalg (34′) am Stoßdämpfer (20′) sich kegelförmig erweitert.

10. Vorrichtung nach einem oder mehreren der vorhergehenden Ansprüche, an einer Radaufhängung für gelenkte Räder eines Kraftfahrzeuges, dadurch gekennzeichnet, daß die Aufnahmekonsole (72) über ein Wälzlager (70) am Aufbau abgestützt ist, wobei die Resultierende (48) innerhalb des wirksamen Lagerdurchmessers d liegt.

11. Vorrichtung nach einem oder mehreren der vorhergehenden Ansprüche, dadurch gekennzeichnet, daß die Aufnahmekonsole und/oder das Schild unmittelbar ein angrenzendes Bauteil des Aufbaues des Kraftfahrzeuges ist.

12. Vorrichtung nach einem oder mehreren der vorhergehenden Ansprüche, wobei die aufbauseitige Rollbalgaufnahme exzentrisch und/oder geneigt zur Lagerung der Kolbenstange des Stoßdämpfers angeordnet ist, dadurch gekennzeichnet, daß die Rollbalgaufnahme (Ringteller 92) an der Kolbenstange (26″) befestigt und zusätzlich im Bereich der Resultierenden (48 bzw. Punkt C) am Aufbau (14″) abgestützt ist.

13. Vorrichtung nach Anspruch 12, dadurch gekennzeichnet, daß zwischen der Rollbalgaufnahme (Ringteller 92) und dem Aufbau (14″) ein elastischer Puffer (116) eingesetzt ist.

14. Vorrichtung nach den Ansprüchen 12 und 13, dadurch gekennzeichnet, daß der elastische Puffer (116) an einem Drehkranz (114) abgestützt ist, zwischen dem und dem Aufbau (14″) ein Wälzlager (110) angeordnet ist und daß die Kolbenstange (26″) des Stoßdämpfers (20″) gegenüber dem Aufbau (14″) ebenfalls verdrehbar (Gleitbüchse 102) ist.

15. Vorrichtung nach Anspruch 14, dadurch gekennzeichnet, daß zwischen der Kolbenstange (26″) und dem Gummilager (98) eine Gleitbüchse (102) vorgesehen ist.

16. Vorrichtung nach einem oder mehreren der Ansprüche 12 bis 15, dadurch gekennzeichnet, daß die Exzentrizität $(e_3)$ der Abstützung (Puffer 116) zur Rollbalgaufnahme (92) derart ist, daß der Absolutwert der Reibungskräfte von Führungshülse (31 und Stoßdämpferkolben (30) am niedrigsten ist.

**Claims**

1. Device for compensating for the wheel-tread lateral forces on a shock-absorber leg of a wheel suspension unit for motor vehicles, with a constructional unit coupled to at least one lower wheel guide member and with a telescopic shock absorber and a wheel mount, which constructional unit is supported at its upper end on the body of the vehicle, a roller bellows acting as the supporting spring element being located around the shock absorber in such a way that the spring force proceeds in a resultant opposing the lateral forces, characterized in that this resultant (48) is supposed directly on the body (14) and that the shock-absorber support (28, 80) is independent of this support.

2. Device according to Claim 1, characterized in that the roller bellows (34) is supported via a supporting bracket (36, 72) joined non-elastically to the body (14) and in that the shock-absorber is joined elastically and directly or indirectly to the supporting bracket.

3. Device according to Claims 1 and 2, characterized in that a shield (50, 74) is located on the supporting bracket (36, 72) and acts on the outer circumference of the roller bellows (34) and prevents its expansion in the direction of the lateral forces $F_Q$.

4. Device according to Claims 1 to 3, characterized in that the shield (50) encompasses the roller bellows (34) in the region of the piston-rod guide of the shock absorber (20) for a circumferential extent of up to 180°, preferably 90°.

5. Device according to Claims 1 to 4, characterized in that the shield (50, 74) is provided with a tube section (52, 76) which completely surrounds and supports the roller bellows in the region outside the piston-rod guide.

6. Device according to one or more of the preceding Claims in which the central axis of the roller bellows runs essentially coincident with or parallel to the resultant (48), characterized in that the roller bellows seat is formed eccentrically on the supporting bracket (72) on the body (14') and on the unrolling sleeve (82) of the shock-absorber (22').

7. Device according to one or more of the Claims 1 to 6, characterized in that the compensating force provided by the shield (50, 74) is reinforced by an offset $(e_1)$ of the roller bellows seat on the supporting bracket (72) towards the shield and an offset $(e_2)$ of the unrolling sleeve (82) away from the shield.

8. Device according to one or more of the preceding Claims, characterized in that the shield (50, 74) prevents the extension of the roller bellows (34) to a varying extent depending on the upward movement of the shock absorber (20).

9. Device according to one or more of the preceding Claims, characterized in that the unrolling sleeve (82) for the roller bellows (34') on the shock absorber (20') widens conically.

10. Device according to one or more of the preceding Claims on a wheel suspension unit for steered wheels of a motor vehicle, characterized in that the support bracket (72) is supported at the body by a roller bearing (70), the resultant (48) lying within the effective diameter of the bearing.

11. Device according to one or more of the preceding Claims, characterized in that the supporting bracket and/or the shield is a direct and ajoining component part of the body of the motor vehicle.

12. Device according to one or more of the preceding Claims in which the body-end roller bellows seat is located eccentrically to and/or at an inclination to the support for the piston rod of the shock absorber, characterized in that the roller bellows seat (circular plate 92) is attached to the piston rod (26″) and is also supported at the body (14″) in the region of the resultant (48, or point C).

13. Device according to Claim 12, characterized in that an elastic buffer (116) is inserted between the roller bellows seat (circular plate 92) and the body (14″).

14. Device according to Claims 12 and 13, characterized in that the elastic buffer (116) is supported at a ring mount (114), between which and the body (14″) is located a roller bearing (110), and in that the piston rod (26″) of the shock absorber (20″) can also be rotated (sliding bush 102) relative to the body (14″).

15. Device according to Claim 14, characterized in that a sliding bush (102) is provided between the piston rod (26″) and the rubber support (98).

16. Device according to one or more of the Claims 12 to 15, characterized in that the eccentricity ($e_3$) of the support (buffer 116) to the roller bellows seat (92) is such as to give the lowest absolute value of the frictional forces of the guide sleeve (31) and the shock absorber piston (30).

## Revendications

1. Dispositif de compensation des forces transversales de sollicitation de roue s'exerçant sur une jambe élastique d'une suspension de roue pour véhicules automobiles comportant un ensemble structural articulé sur au moins un organe inférieur de guidage de roue, pourvu d'un amortisseur télescopique et d'un support de roue, ledit ensemble structural s'appuyant par son extrémité supérieure contre la caisse du véhicule automobile, et un soufflet enroulable, servant d'élément élastique porteur, étant disposé autour de l'amortisseur de telle sorte que la force élastique soit orientée selon une résultante s'opposant aux forces transversales, caractérisé en ce que cette résultante (48) est supportée directement par la caisse (14), et le support d'amortisseur (28 ; 80) est indépendant de cet appui.

2. Dispositif selon la revendication 1, caractérisé en ce que le soufflet enroulable (34) est soutenu par l'intermédiaire d'une console réceptrice (36 ; 72) reliée de façon non élastique à la caisse (14), et en ce que l'amortisseur est relié élastiquement, directement ou indirectement, avec la console réceptrice.

3. Dispositif selon les revendications 1 et 2, caractérisé en ce qu'il est prévu sur la console réceptrice (36 ; 72) un bouclier (50, 74), qui empêche, en s'accrochant sur la périphérie extérieure du soufflet enroulable (34), son expansion dans la direction des forces transversables $F_Q$.

4. Dispositif selon les revendications 1 à 3, caractérisé en ce que le bouclier (50) entoure le soufflet enroulable (34), dans la zone du guide de la tige de piston de l'amortisseur (20), sur un angle périphérique pouvant atteindre 180°, de préférence de 90°.

5. Dispositif selon les revendications 1 à 4, caractérisé en ce que le bouclier (50 ; 74) est pourvu d'une partie tubulaire (52 ; 76), qui entoure complètement ou soutient le soufflet enroulable (34) dans une zone extérieure au guide de la tige de piston.

6. Dispositif selon une ou plusieurs des revendications précédentes, l'axe central du soufflet enroulable étant sensiblement en coïncidence ou parallèle à la résultante (48), caractérisé en ce que l'appui du soufflet enroulable sur la console réceptrice (72) est excentré par rapport à la caisse (14′) et au fourreau de déroulement (82′) de l'amortisseur (22′).

7. Dispositif selon une ou plusieurs des revendications 1 à 6, caractérisé en ce que la force de compensation engendrée par le bouclier (50, 74) est amplifiée par un rapprochement ($e_1$) de l'appui de soufflet enroulable sur la console réceptrice (72) par rapport au bouclier et par un éloignement ($e_2$) du fourreau de déroulement (82′) par rapport au bouclier.

8. Dispositif selon une ou plusieurs des revendications précédentes, caractérisé en ce que le bouclier (50 ; 74) empêche l'expansion du soufflet enroulable (34) à un degré fortement différent en fonction du mouvement de rentrée de l'amortisseur (20).

9. Dispositif selon une ou plusieurs des revendications précédentes, caractérisé en ce que le fourreau de déroulement (82′) du soufflet enroulable (34′) s'élargit avec une forme conique sur l'amortisseur (20′).

10. Dispositif selon une ou plusieurs des revendications précédentes, pour une suspension de roue pour des roues directrices d'un véhicule automobile, caractérisé en ce que la console réceptrice (72) est soutenue par l'intermédiaire d'un roulement (70) sur la caisse, la résultante (48) passant à l'intérieur du cercle primitif utile de diamètre d du roulement.

11. Dispositif selon une ou plusieurs des revendications précédentes, caractérisé en ce que la console réceptrice et/ou le bouclier sont directement adjacents à un composant de la caisse du véhicule automobile.

12. Dispositif selon une ou plusieurs des revendications précédentes, le réceptacle de soufflet enroulable situé du côté de la caisse étant disposé excentriquement et/ou avec inclinaison par rapport au support de la tige de piston de l'amortisseur, caractérisé en ce que le réceptacle de soufflet enroulable (plaquette annulaire 92) est fixé sur la tige de piston (26″) et est soutenu additionnellement sur la caisse (14″) dans une zone de la résultante (48 ou point C).

13. Dispositif selon la revendication 12, caractérisé en ce qu'il est interposé un tampon élastique (116) entre le réceptacle de soufflet enroulable (plaquette annulaire 92) et la caisse (14″).

14. Dispositif selon les revendications 12 et 13, caractérisé en ce que le tampon élastique (116) est soutenu par une couronne tournante (114), entre laquelle et la caisse (14″) est disposé un roulement (110), et en ce que la tige de piston (26″) de l'amortisseur (20″) est montée également de façon tournante (coussinet 102) par rapport à la caisse (14″).

15. Dispositif selon la revendication 14, caractérisé en ce qu'il est prévu un coussinet (102) entre la tige de piston (26″) et le palier en caoutchouc (98).

16. Dispositif selon une ou plusieurs des revendications 12 à 15, caractérisé en ce que l'excentri-

cité ($e_3$) de la partie de soutien (tampon 116) par rapport au réceptacle de soufflet enroulable (92) est telle que la valeur absolue des forces de frottement du fourreau de guidage (31) et du piston d'amortisseur (30) est minimale.

# Fig.1

Fig.2

Fig.3

*Fig.4*

Fig.5

EP 0 210 553 B1